# EUROPÄISCHE PATENTANMELDUNG

(11) **EP 2 878 201 A1**
(43) Veröffentlichungstag der Anmeldung: **03.06.2015**
(21) Anmeldenummer: 13195042.0
(22) Anmeldetag: 29.11.2013
(51) Int. Cl.: A21B 3/15

(54) **Backblech**

(71) Anmelder: Salzburger Aluminium Aktiengesellschaft, 5651 Lend (AT)
(72) Erfinder: Steiner, Gottfried, 8724 Spielberg (AT)
(74) Vertreter: Weiser, Andreas

(57) **Zusammenfassung**

Die vorliegende Erfindung betrifft ein Backblech (8) mit einem flächigen Backgutträger (9) aus Metall, wobei der Backgutträger (9) über seinen gesamten Umfang von einem seinen Rand (10) umgreifenden Wulst (11) aus Kunststoff eingefasst ist und in Randnähe an seiner Unterseite (12) vorragende Gleitelemente (13) aus Kunststoff hat.

## Beschreibung

Die vorliegende Erfindung betrifft ein Backblech mit einem flächigen Backgutträger aus Metall.

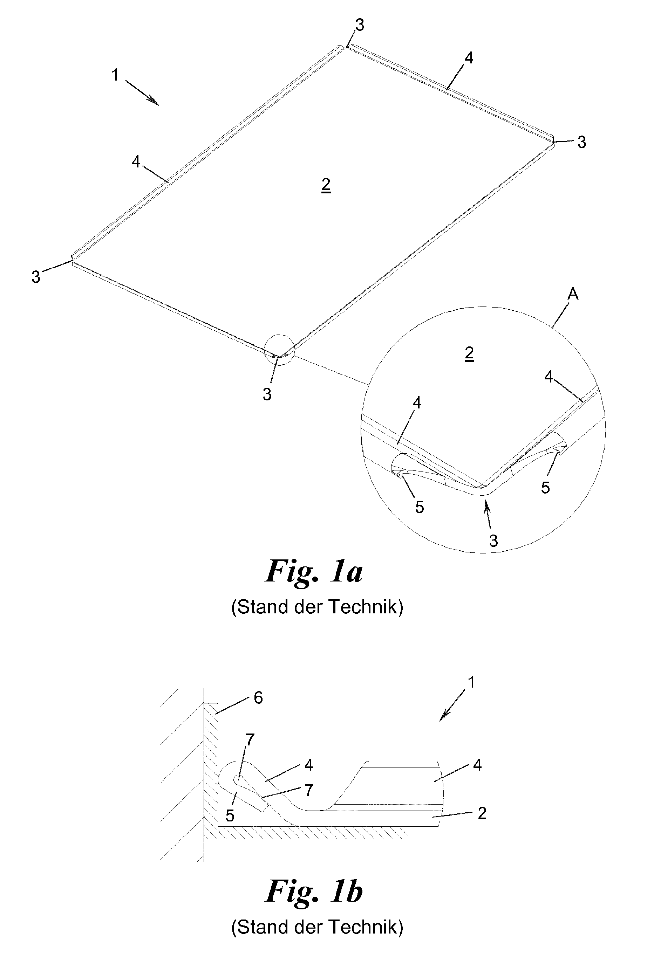

Durch den Trend zu lokalen Backstuben, die vorkonfektionierte Backwaren (Teiglinge) bedarfsorientiert frisch backen bzw. aufbacken, besteht ein großer Bedarf an Backblechen. Ein Backblech aus Metall gemäß dem Stand der Technik zeigen die Fig. 1a und 1b beispielhaft. Das Backblech 1 hat einen flächigen Backgutträger 2 und ist an seinen Ecken 3 beschnitten, wobei die verbleibenden Randbereiche 4 nach oben gebogen sind und, wie in Ausschnitt A in Fig. 1a sowie im Querschnitt in Fig. 1b dargestellt, einen Falz 5 haben. Dadurch entstehen jedoch scharfkantige Grate und Schnittkanten, welche - neben den weiteren Kanten des Backblechs 1 - insbesondere beim Stapeln mehrer Backbleche 1 sowie beim Einschieben eines Backbleches 1 in Horden 6 eines Backofens oder eines Regalwagens zu Kratzern und Abrieb führen bzw. etwaige Beschichtungen des Backblechs 1 bzw. der Horden 6 beschädigen. Der Abrieb - ob Metall oder Beschichtungsmaterial - führt zu einer Verunreinigung des Backraums und des Backguts. Insbesondere Aluminiumstaub der meist aus Aluminium gefertigten Backbleche 1 ist aus gesundheitlichen Gründen jedoch zu vermeiden, ebenso wie die gefährliche Verunreinigung des Backguts durch scharfkantige Splitter infolge von großflächigem Ablösen von Beschichtungen der Backbleche 1 beim Aufschlagen der scharfen Kanten, wodurch zugleich das betroffene Backblech 1 unbrauchbar wird. Ferner sammelt sich vor allem nach jeder Backblech-Reinigung in den im Bereich der Falze 5 verbleibenden Spalten 7 Restfeuchte, welche eine gesundheitsschädliche Schimmelbildung begünstigt.

Die Erfindung setzt sich zum Ziel, ein Backblech zu schaffen, welches die Gesundheits- und Hygieneanforderungen in Backstuben bzw. für das Backgut besser erfüllt und die Haltbarkeit des Backblechs erhöht.

Dieses Ziel wird durch ein Backblech mit einem flächigen Backgutträger aus Metall erreicht, der sich dadurch auszeichnet, dass der Backgutträger über seinen gesamten Umfang von einem seinen Rand umgreifenden Wulst aus Kunststoff eingefasst ist und in Randnähe an seiner Unterseite vorragende Gleitelemente aus Kunststoff hat.

Durch einen solchen Wulst ist das Backblech rundum geschützt; es treten keine scharfen Kanten oder Grate auf. Ein Berühren zweier Metallflächen beim Stapeln zweier Backbleche oder beim Einschieben eines Backblechs in die Horden des Backofens oder Regalwagens wird zuverlässig verhindert. Die Gleitelemente führen zu einem leichten Gleiten des Backblechs auf den Horden bzw. zweier Backbleche aufeinander; dadurch entsteht kein Abrieb. Mangels Falze und Ritzen verbleibt auch beim Reinigungsprozess keine schimmelfördernde Restfeuchte. Das Backblech ist äußerst hygienisch, langlebig und vielfach wiederverwendbar.

Um das Backblech für verschiedenartige Backöfen und Regalwagen gleichermaßen flexibel einsetzbar zu machen, ist es günstig, wenn Wulst und Gleitelement voneinander gesondert sind. Je nach Form des Backgutträgers ist diese Ausführungsform des Backblechs auch materialsparend. Alternativ dazu sind die Gleitelemente durch die Unterseite des Wulstes gebildet. Dies vereinfacht den Herstellungsprozess, insbesondere das dauerhafte Anbringen der Gleitelemente am Backgutträger.

Besonders günstig ist es, wenn der Wulst im wesentlichen komplementäre Ober- und Unterseiten hat. Dadurch lässt sich das Backblech mit definiertem, sicherem Sitz auf gleichartigen Backblechen stapeln.

In einer bevorzugten Ausführungsform des erfindungsgemäßen Backblechs ist der Backgutträger über seine gesamte Fläche im wesentlichen eben. Dies führt zu einer sehr flachen Bauform und ermöglicht ein besonders platzsparendes Stapeln mehrerer Backbleche. Um dabei einen Überlaufschutz bzw. einen Schutz vor dem Herabgleiten des Backguts zu bilden und zur Vermeidung eines Verbiegens des Backblechs ist es vorteilhaft, wenn der Wulst außerhalb des Umfangs des Backgutträgers nach oben gebogen ist.

In einer dazu alternativen Ausführungsvariante des erfindungsgemäßen Backblechs ist der Backgutträger in seinem mittleren Bereich im wesentlichen eben und sein Randbereich nach oben gebogen. Dies stabilisiert bereits den Backgutträger selbst, sodass der Wulst keine oder nur noch geringe Stabilisierungswirkung erzielen und dabei kleiner sein und/oder aus weniger stabilem Kunststoff gefertigt sein kann. Dies führt wiederum zu einer einfacheren Fertigung des Wulstes.

In dieser Ausführungsvariante des Backblechs ist es vorteilhaft, wenn der Wulst den Rand des nach oben gebogenen Randbereichs des Backgutträgers im Schnitt gesehen etwa kugelförmig umgreift, wobei gesonderte Gleitelemente vorgesehen sind. Dies ist materialsparend und bietet dennoch einen sichern Schutz des Randes des Backblechs und zugleich ein sicheres Gleiten in den Horden.

Besonders günstig ist es dabei, wenn der Backgutträger in seinem nach oben gebogenen Randbereich Lüftungsöffnungen hat. Dies führt zu einer verbesserten Heißluftzirkulation im Backofen.

Eine im Vergleich dazu einfachere Herstellung ergibt sich, wenn der Wulst den gesamten nach oben gebogenen Randbereich des Backgutträgers vollständig umgreift und dabei in Randnähe auch auf die Unterseite des mittleren Bereichs weitergeführt ist. Dies verbessert die Verankerung des Wulstes am Backgutträger. Der Wulst erfüllt so zugleich die Funktion der Gleitelemente.

Um eine besonders beständige Verbindung zwischen Wulst bzw. Gleitelementen und Backgutträger zu erzeugen, ist es günstig, wenn der Backgutträger in Randnähe Vertiefungen oder Öffnungen aufweist, welche durch den Kunststoff des Wulstes und/oder eines der Gleitelemente ausgefüllt sind. Derartige Vertiefungen oder Öffnungen ermöglichen einen verstärkten Kraftschluss bzw. sogar einen Formschluss zwischen dem Kunststoff von Wulst oder Gleitelementen und dem Metall des Backgutträgers.

Besonders günstig ist, wenn der Kunststoff ein Verbundkunststoff, bevorzugt ein mit Fasern verstärkter Verbundkunststoff, ist. Durch entsprechende, dem Fachmann bekannte Füllstoffe kann der Ausdehnungskoeffizient des Kunststoffs von Wulst bzw. Gleitelementen über einen weiten Temperaturbereich an jenen des Metalls des Backgutträgers angepasst werden; ferner wird die Verwendung von Kunststoffen erleichtert, die mit dem Metall des Backgutträgers eine besonders gute Verbindung eingehen. Eine Faserverstärkung hilft, die Gesamtstabilität des Backblechs zu erhöhen, was eine flache Bauform, wie sie vielfach aus Platzgründen erwünscht ist, begünstigt.

Besonders bevorzugt ist der Backgutträger antihaftbeschichtet. Dies reduziert seine Verunreinigung und erleichtert die Reinigung, indem das Anhaften des Backgutes am Backgutträger vermieden wird.

Besonders vorteilhaft ist es, wenn der Backgutträger an der Ober- und/oder Unterseite über seine Fläche verteilte Vertiefungen und/oder Noppen hat. Dadurch wird der Wärmeübergang der Heißluft im Backofen auf das Backblech aufgrund seiner vergrößerten Oberfläche verbessert; zugleich wird die Neigung zum Anhaften des Backgutes am Backgutträger reduziert. Ferner wird durch die Strukturierung die Steifigkeit des Backgutträgers bei gleichzeitiger Materialeinsparung erhöht.

Um die Heißluftzirkulation auch über mehrere Backebenen zu verbessern, hat besonders bevorzugt der Backgutträger über seine Fläche verteilte Durchbrechungen. Günstig ist dabei, wenn zumindest einige der Durchbrechungen schlitzförmig sind. Solche Schlitze können sehr schmal ausgeführt werden und verhindern dadurch ein Eindringen des Teiges und damit eine Verschmutzung des Backgutträgers bzw. das Anhaften des Backgutes, während zugleich eine gute Durchlüftung des Backofens oder Regalwagens gewährleistet bleibt.

Besonders vorteilhaft ist es, wenn sich die Durchbrechungen zur Oberseite des Backgutträgers hin erweitern. Dies erleichtert die Entnahme des Backguts, sogar wenn etwas Teig des Backgutes in einige der Durchbrechungen eingedrungen ist. Ferner wird dadurch die Reinigung, z.B. mit Bürsten oder Wasserstrahl von der Rückseite, wesentlich vereinfacht, insbesondere wenn die Durchbrechungen an der Oberseite des Backgutträgers in seine Fläche trompetenförmig ausmünden, da der Backgutträger in diesem Fall keine Kanten an seiner Oberseite hat, an welchen das Backgut anhaften könnte.

Die Erfindung wird nachfolgend anhand von in den beigeschlossenen Zeichnungen dargestellten Ausführungsbeispielen näher erläutert. In den Zeichnungen zeigen:
die Fig. 1a und 1b ein Backblech gemäß dem Stand der Technik in Perspektivansicht von schräg oben (Fig. 1a) bzw. ausschnittsweise im Querschnitt (Fig. 1b);
Fig. 2 eine erste Ausführungsform eines erfindungsgemäßen Backblechs in Perspektivansicht von schräg oben;
die Fig. 3a bis 3c, 4a bis 4c und 5a bis 5c weitere Ausführungsformen von erfindungemäßen Backblechen, u.zw. ausschnittsweise im Schnitt (Fig. 3a, 4a, 5a bis 5c), in Verwendungsstellung eingelegt in Horden (Fig. 3b und 4b) und gestapelt (Fig. 3c und 4c);
Fig. 6 eine weitere Ausführungsform des Backgutträgers des erfindungsgemäßen Backblechs in einem ausschnittsweisen Querschnitt; und
die Fig. 7a bis 7d weitere Ausführungsformen des Backgutträgers jeweils ausschnittsweise in Draufsicht (Fig. 7a bis 7c) bzw. im Querschnitt (Fig. 7d).

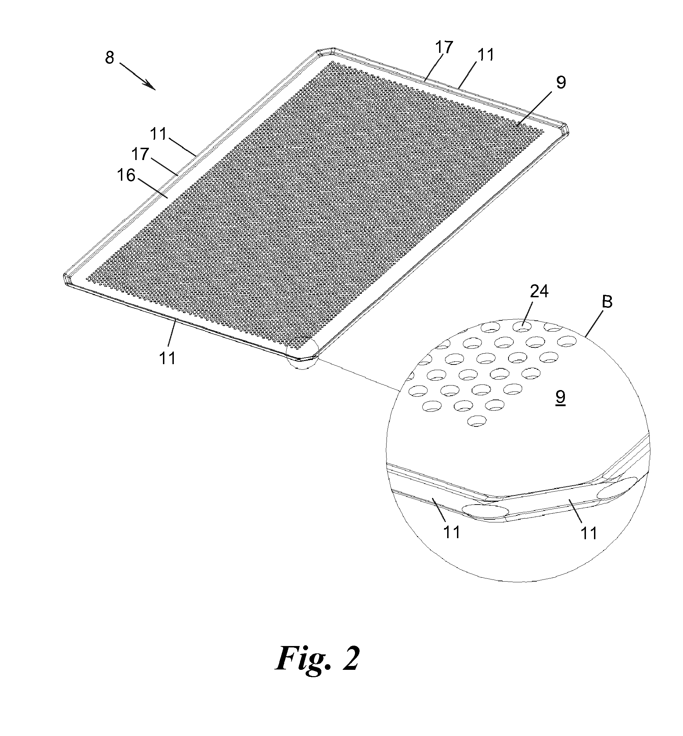

Im Gegensatz zum eingangs erläuterten Backblech 1 gemäß dem Stand der Technik nach den Fig. 1a und 1b, bei welchem die Ecken 3 des Backblechs 1 beschnitten und die Randbereiche 4 gebogen und gefalzt sind, hat ein erfindungsgemäßes Backblech 8 gemäß den Fig. 2 bis 7 einen flächigen Backgutträger 9 aus Metall, welcher über seinen gesamten Umfang von einem seinen Rand 10 umgreifenden Wulst 11 aus Kunststoff eingefasst ist und in Randnähe an seiner Unterseite 12 vorragende Gleitelement 13 aus Kunststoff hat.

Als Kunststoffe für Wulst 11 und Gleitelemente 13 kommen insbesondere Hochtemperatur-Thermoplaste, z.B. Polyetheretherketon (PEEK), flüssigkristalline Polymere (LCP), partiell aromatische Polyamide (PPA), Polyphenylensulfide (PPS), Polyamide (PAI), Polyimide (PI), Silikonelastomere und Fluorpolymere (unter anderem Polytetrafluorethylen, PTFE) sowie, für niedrige Temperaturen, auch Duroplaste in Frage. Ferner kann der Kunststoff von Wulst 11 und Gleitelementen 13 ein Verbundkunststoff sein mit Zusatzstoffen, welche z.B. sein Temperaturausdehnungsverhalten an jenes des Backgutträgers 9 anpassen, oder mit Verstärkungsfasern, z.B. anorganischen Fasern wie Glas- oder Basaltfasern oder organischen Verstärkungsfasern wie Aramid- oder Kohlenstofffasern. Auch können Wulst 11 und Gleitelemente 13 aus voneinander verschiedenen Kunststoffen gefertigt sein.

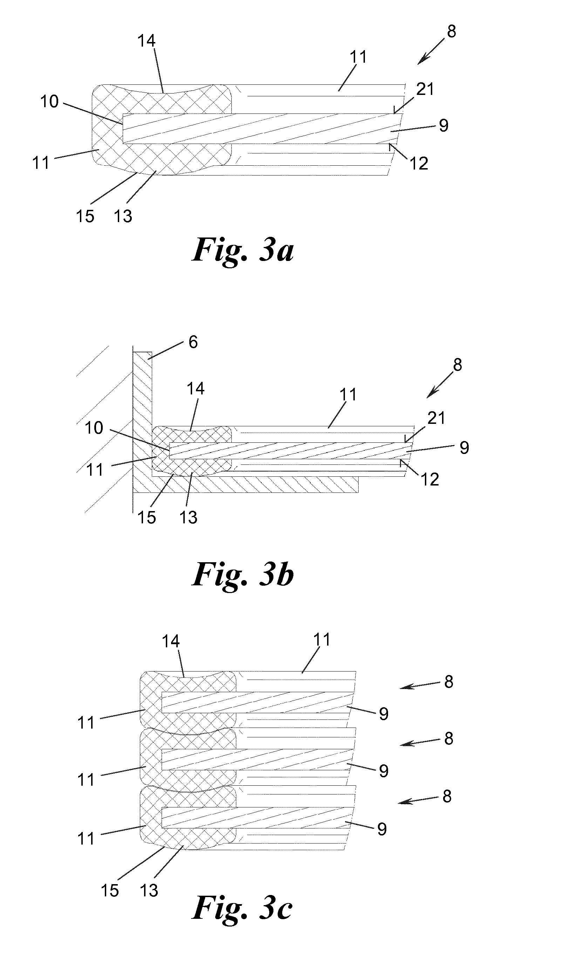

Anhand der Fig. 3 bis 7 wird im Folgenden das erfindungsgemäße Backblech 8 in verschiedenen Ausführungsvarianten näher erläutert, wobei gleichartige Elemente die gleichen Bezugszeichen haben.

Im Ausführungsbeispiel von Fig. 3a ist der Backgutträger 9 über seine gesamte Fläche im wesentlichen eben. Der den Rand 10 umgreifende Wulst 11 hat an seiner Oberseite eine z.B. umlaufende Einbuchtung 14 und an seiner Unterseite eine dazu im wesentlichen komplementäre Ausbuchtung 15.

In diesem Ausführungsbeispiel dient die Ausbuchung 15 des Wulstes 11, wie in Fig. 3b dargestellt, zugleich als Gleitelement 13 auf einer Horde 6 eines Backofens oder eines Regalwagens (nicht näher gezeigt), in welchem die Backbleche - meist mit Backgut bestückt - zwischenzeitlich gelagert werden, z.B. zum Auftauen oder Abkühlen des Backguts. Die Gleitelemente 13 werden somit im Beispiel der Fig. 3a bis 3c durch die Unterseite des Wulstes 11 selbst gebildet. Zugleich schützt der Wulst 11 den Rand 10 des Backblechs 8 gegen seitliches Anlaufen an der Horde 6, ebenso wie gegenüber dem Anlaufen an einer Hinterseite des Backofens oder Regalwagens.

Durch die im wesentlichen komplementären Ober- und Unterseiten des Wulstes 11 im Beispiel der Fig. 3a bis 3c können mehrere solcher Backbleche 8 besonders platzsparend und dabei sicher gegen Verrutschen gestapelt werden, wie in Fig. 3c gezeigt ist. Es versteht sich, dass die Einbuchtung 14 und/oder die Ausbuchtung 15 dabei nicht umlaufend sein müssen; auch könnte die Einbuchtung 14 an der Unterseite und die Ausbuchtung 15 an der Oberseite des Wulstes 11 angeordnet sein und/oder eine andere Form, z.B. V-Form, haben.

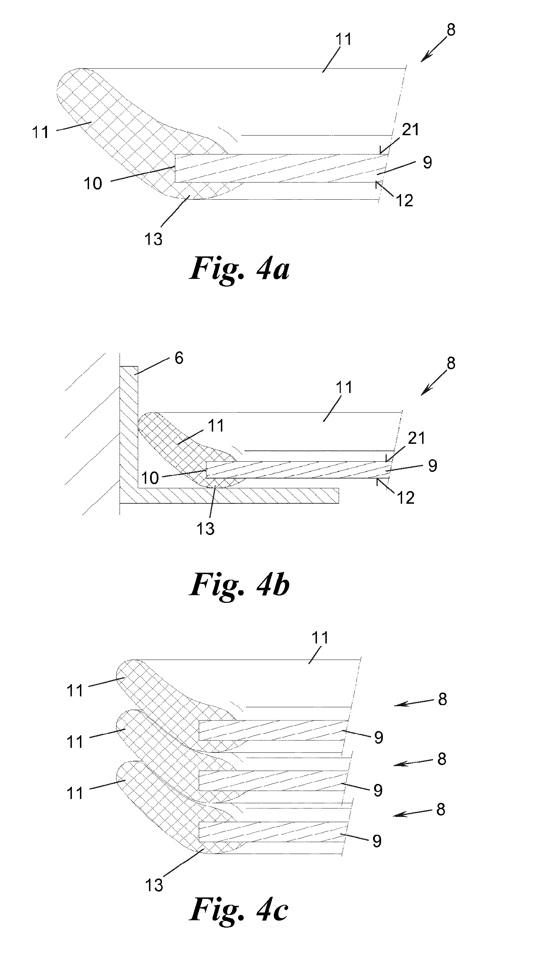

In einer alternativen Ausführungsform gemäß den Fig. 4a bis 4c ist der Backgutträger 9 weiterhin über seine gesamte Fläche im wesentlichen eben, jedoch ist der Wulst 11 außerhalb des Umfangs des Backgutträgers 9 nach oben gebogen. Wie bereits in Bezug auf die Variante nach Fig. 3b erläutert wurde, schützt der Wulst 11 - wie auch in allen anderen Varianten - in jener nach den Fig. 4a bis 4c das Backblech 8 bei möglichem seitlichem Anschlagen an Horde 6 oder Rückseite von Backofen oder Regalwagen.

Der Wulst 11 könnte dabei von den Gleitelementen 13 gesondert sein; im dargestellten Beispiel sind die Gleitelemente 13 jedoch wieder durch die Unterseite des Wulstes 11 gebildet, sodass das Backblech 8 am Wulst 11 in der Horde 6 gleitet, wie insbesondere in Fig. 4b ersichtlicht ist.

Gemäß Fig. 4c sind die Backbleche 8 dank der im wesentlichen wieder komplementären Ober- und Unterseiten des Wulstes 11 dieser Ausführungsvariante ebenfalls platzsparend stapelbar, wobei ein Berühren, Zerkratzen oder aneinander Scheuern mehrerer Backgutträger 9 aus Metall ebenso wie in den anderen erfindungsgemäßen Ausführungsformen ausgeschlossen ist.

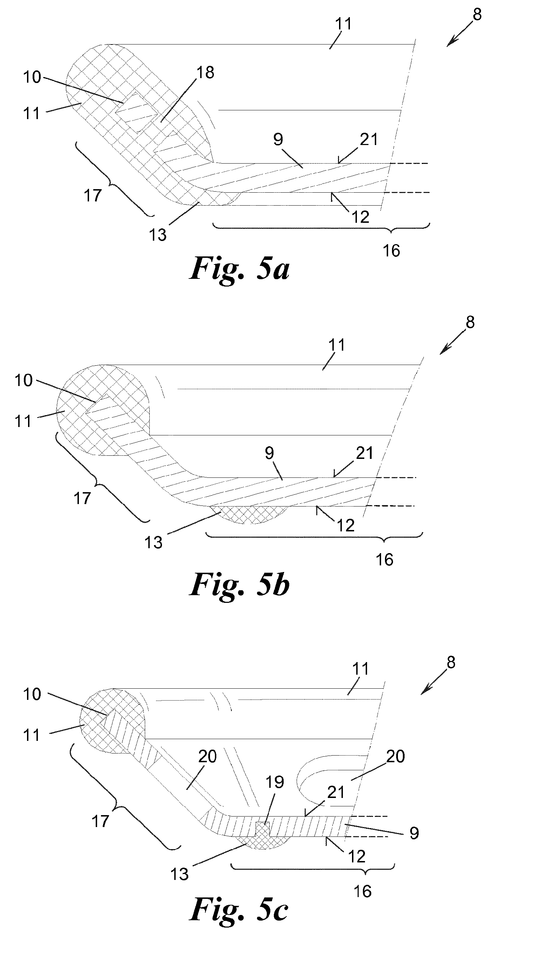

Wie in den Ausführungsvarianten der Fig. 5a bis 5c gezeigt, kann der Backgutträger 9 alternativ zu den zuvor beschriebenen Ausführungsformen in seinem mittleren Bereich 16 im wesentlichen eben und sein Randbereich 17 davon nach oben gebogen sein. Dabei kann der Wulst 11 den gesamten nach oben gebogenen Randbereich 17 des Backgutträgers 9 vollständig umgreifen und in Randnähe auch auf die Unterseite des ebenen mittleren Bereichs 16 des Backgutträgers 9 weitergeführt sein (Fig. 5a). In diesem Beispiel werden die Gleitelemente 13 wiederum durch die Unterseite des Wulstes 11 gebildet.

Im Ausführungsbeispiel nach Fig. 5b umgreift hingegen der Wulst 11 den Rand 10 des nach oben gebogenen Randbereichs 17 des Backgutträgers 9 im Schnitt gesehen etwa kugelförmig, wobei vom Wulst 11 gesonderte Gleitelemente 13 in Randnähe an der Unterseite 12 des Backgutträgers 9 vorgesehen sind, auf welchen das Backblech 8 auf den Horden 6 des Backofens oder Regalwagens oder auch auf einem anderen Backblech 8 gleitet.

Im Beispiel von Fig. 5a weist der Backgutträger 9 ferner in Randnähe optionale Öffnungen 18 auf, welche durch den Kunststoff des Wulstes 11 ausgefüllt sind, wodurch der Wulst 11 am Backgutträger 9 fest verankert ist. Ähnlich dazu weist der Backgutträger 9 gemäß Fig. 5c in Randnähe Vertiefungen 19 auf, welche zur Verankerung ebenfalls durch Kunststoff - in diesem Beispiel jenem des Gleitelements 13 - ausgefüllt sind. Es versteht sich, dass solche Öffnungen 18 und/oder Vertiefungen 19, wenn gewünscht, ebenso zur Verankerung von Wulst 11 und/oder Gleitelementen 13 der weiteren Ausführungsformen, z.B. gemäß den Fig. 3a, 4a oder 5a, vorgesehen werden können.

Im Beispiel von Fig. 5c hat der Backgutträger 9 ferner in seinem nach oben gebogenen Randbereich 17 Lüftungsöffnungen 20, durch welche im Backofen Heißluft und beim Auskühlen auf Regalwagen Kühlluft zu dem auf dem Backblech 8 gelagerten Backgut gelangt.

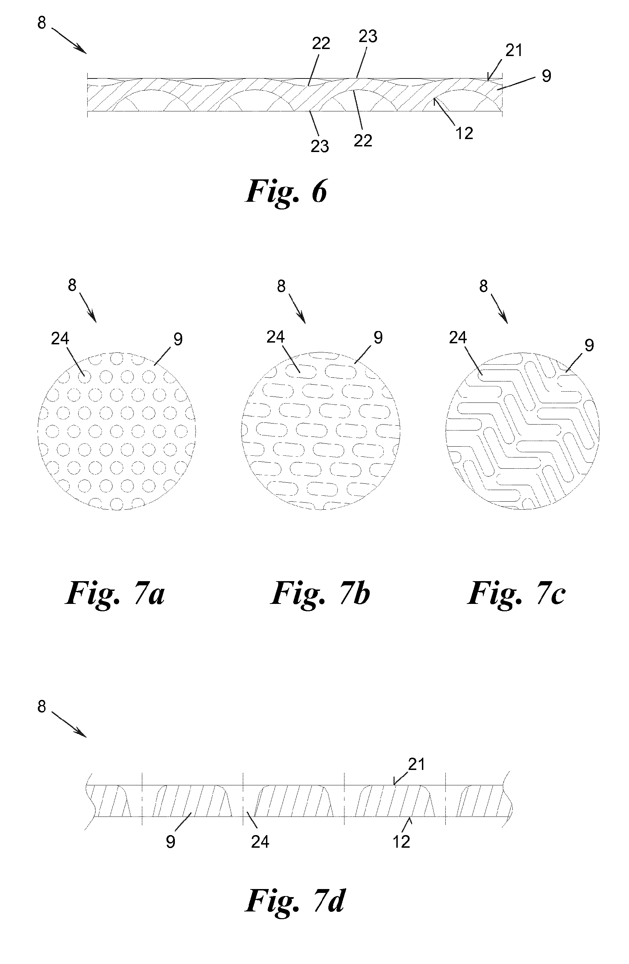

Gemäß dem Beispiel von Fig. 6 kann der Backgutträger 9 in jeder der oben beschriebenen Ausführungsformen des Backblechs 8 an seiner Ober- und/oder Unterseite 12, 21 über seine Fläche verteilte Strukturen, z.B. Vertiefungen 22 und/oder Noppen 23, haben. Auch ist der Backgutträger 9 optional an seiner Ober- und/oder Unterseite 12, 21 antihaftbeschichtet. Solche Antihaftbeschichtungen können z.B. aus Fluorpolymeren (PTFE), Silikonelastomeren oder Keramikwerkstoffen sein.

Der Backgutträger 9 gemäß den Ausführungsvarianten der Fig. 7a bis 7c hat zur Durchlüftung über seine Fläche verteilte optionale Durchbrechungen 24, wie dies auch in Fig. 2 dargestellt ist. Die Durchbrechungen 24 können einerseits kreisrund sein (Fig. 7a), wobei auch verschiedene Durchmesser möglich sind (nicht dargestellt). Andererseits könnten zumindest einige der Durchbrechungen 24, oder gemäß Fig. 7b auch alle, schlitzförmig sein. Dabei ist es möglich, dass diese in Draufsicht einen - gegebenenfalls auch mehrfach - geknickten Verlauf haben, z.B. einen V- oder wellenförmigen Verlauf wie anhand der V-förmigen Durchbrechungen 24 von Fig. 7c beispielhaft gezeigt.

Die Durchbrechungen 24 in den Ausführungsformen der Fig. 7a bis 7c sind beispielsweise jeweils zylindrisch, d.h. mit geraden Flanken. Nach Fig. 7d können sich die optionalen Durchbrechungen 24 alternativ dazu zur Oberseite 21 des Backgutträgers 9 hin erweitern, d.h. schräge Flanken haben, und dabei insbesondere an der Oberseite 21 des Backgutträgers 9 trompetenförmig ausmünden, sodass die Durchbrechungen 24 kantenfrei in die Oberseite 21 des Backgutträgers 9 übergehen.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Backblech mit einem flächigen Backgutträger aus Metall, **dadurch gekennzeichnet, dass** der Backgutträger (9) über seinen gesamten Umfang von einem seinen Rand (10) umgreifenden Wulst (11) aus Kunststoff eingefasst ist und in Randnähe an seiner Unterseite (12) vorragende Gleitelemente (13) aus Kunststoff hat.

2. Backblech nach Anspruch 1, **dadurch gekennzeichnet, dass** Wulst (11) und Gleitelemente (13) voneinander gesondert sind.

3. Backblech nach Anspruch 1, **dadurch gekennzeichnet, dass** die Gleitelemente (13) durch die Unterseite des Wulstes (11) gebildet sind.

4. Backblech nach einem der Ansprüche 1 bis 3, **dadurch gekennzeichnet, dass** der Wulst (11) im wesentlichen komplementäre Ober- und Unterseiten hat.

5. Backblech nach einem der Ansprüche 1 bis 4, **dadurch gekennzeichnet, dass** der Backgutträger (9) über seine gesamte Fläche im wesentlichen eben ist.

6. Backblech nach Anspruch 5, **dadurch gekennzeichnet, dass** der Wulst (11) außerhalb des Umfangs des Backgutträgers (9) nach oben gebogen ist.

7. Backblech nach einem der Ansprüche 1 bis 4, **dadurch gekennzeichnet, dass** der Backgutträger (9) in seinem mittleren Bereich (16) im wesentlichen eben und sein Randbereich (17) nach oben gebogen ist.

8. Backblech nach Anspruch 7 in Verbindung mit Anspruch 2, **dadurch gekennzeichnet, dass** der Wulst (11) den Rand (10) des nach oben gebogenen Randbereichs (17) des Backgutträgers (9) im Schnitt gesehen etwa kugelförmig umgreift.

9. Backblech nach Anspruch 8, **dadurch gekennzeichnet, dass** der Backgutträger (9) in seinem nach oben gebogenen Randbereich (17) Lüftungsöffnungen (20) hat.

10. Backblech nach Anspruch 7 in Verbindung mit Anspruch 3, **dadurch gekennzeichnet, dass** der Wulst (11) den gesamten nach oben gebogenen Randbereich (17) des Backgutträgers (9) vollständig umgreift und dabei in Randnähe auch auf die Unterseite des mittleren Bereichs (16) weitergeführt ist.

11. Backblech nach einem der Ansprüche 1 bis 10, **dadurch gekennzeichnet, dass** der Backgutträger (9) in Randnähe Vertiefungen (19) oder Öffnungen (18) aufweist, welche durch den Kunststoff des Wulstes (11) und/oder der Gleitelemente (13) ausgefüllt sind.

12. Backblech nach einem der Ansprüche 1 bis 11, **dadurch gekennzeichnet, dass** der Kunststoff ein Verbundkunststoff, bevorzugt ein mit Fasern verstärkter Verbundkunststoff, ist.

13. Backblech nach einem der Ansprüche 1 bis 12, **dadurch gekennzeichnet, dass** der Backgutträger (9) antihaftbeschichtet ist.

14. Backblech nach einem der Ansprüche 1 bis 13, **dadurch gekennzeichnet, dass** der Backgutträger (9) an der Ober- und/oder Unterseite (21, 12) über seine Fläche verteilte Vertiefungen (22) und/oder Noppen (23) hat.

15. Backblech nach einem der Ansprüche 1 bis 14, **dadurch gekennzeichnet, dass** der Backgutträger (9) über seine Fläche verteilte Durchbrechungen (24) hat.

16. Backblech nach Anspruch 15, **dadurch gekennzeichnet, dass** zumindest einige der Durchbrechungen (24) schlitzförmig sind.

17. Backblech nach Anspruch 15 oder 16, **dadurch gekennzeichnet, dass** sich die Durchbrechungen (24) zur Oberseite (21) des Backgutträgers (9) hin erweitern.

18. Backblech nach Anspruch 17, **dadurch gekennzeichnet, dass** die Durchbrechungen (24) an der Oberseite (21) des Backgutträgers (9) in seine Fläche trompetenförmig ausmünden.
